# EUROPÄISCHE PATENTSCHRIFT

(11) **EP 1 179 124 B1**
(45) Veröffentlichungstag und Bekanntmachung des Hinweises auf die Patenterteilung: **03.09.2003**
(21) Anmeldenummer: 00920734.1
(22) Anmeldetag: 20.04.2000
(51) Int. Cl.: F01N 3/08, F02D 41/02

(54) **VERFAHREN ZUR ENTSCHWEFELUNG**
DESULPHURISATION METHOD
PROCEDE DE DESULFURATION

(30) Priorität: 12.05.1999 DE 19921972
(43) Veröffentlichungstag der Anmeldung: 13.02.2002
(73) Patentinhaber: Volkswagen Aktiengesellschaft, 38436 Wolfsburg (DE)
(72) Erfinder: POTT, Ekkehard, D-38518 Gifhorn (DE)
(86) Internationale Anmeldenummer: EP0003621
(87) Internationale Veröffentlichungsnummer: WO00070203

(56) Entgegenhaltungen:
- EP-A- 0 892 158
- EP-A- 0 893 154
- EP-A- 0 899 430
- DE-A- 19 731 624
- GB-A- 2 324 052

## Beschreibung

Die Erfindung betrifft ein Verfahren zur Entschwefelung von wenigstens einem in einem Abgaskanal einer Verbrennungskraftmaschine angeordneten NOₓ-Speicherkatalysator mit den im Oberbegriff des Anspruchs 1 genannten Merkmalen.

Verfahren zur Entschwefelung von NOₓ-Speicherkatalysatoren sind bekannt. Solche NOₓ-Speicherkatalysatoren werden zur Minderung eines NOₓ-Anteils in Abgasen der Verbrennungskraftmaschine eingesetzt. Infolge sich verschärfender gesetzlicher Normen hinsichtlich dieses Abgasbestandteils ist eine weitere Reduzierung einer NOₓ-Emission erwünscht. Dazu erfolgt unter bestimmten Arbeitsmodi der Verbrennungskraftmaschine eine katalytische Umsetzung des NOₓ mit reduktiven Gaskomponenten wie CO, HC oder H₂.

Der Arbeitsmodus der Verbrennungskraftmaschine kann unter anderem durch ein Verhältnis einer Sauerstoffkonzentration zu einer Brennstoffgemischkonzentration beschrieben werden. Dabei spiegelt ein sogenannter Lambdawert die stöchiometrischen Verhältnisse dieser beiden Komponenten wider. Bei Lambdawerten < 1 übersteigt die Konzentration des Brennstoffgemisches die Konzentration des Sauerstoffs, und infolgedessen ist der Anteil reduktiver Komponenten im Abgas erhöht (λ < 1 entspricht fetter Arbeitsmodus). Ist dagegen die Konzentration des Sauerstoffs größer als die Konzentration des Brennstoffgemisches, so ist λ > 1 (magerer Arbeitsmodus).

Die katalytische Umsetzung des NOₓ kann lediglich unter einem Arbeitsmodus mit λ ≤ 1 erfolgen, während bei λ > 1 das NOₓ von dem NOₓ-Speicherkatalysator absorbiert wird. Vor Erreichen einer maximalen Kapazität des NOₓ-Speicherkatalystors für NOₓ muß die Verbrennungskraftmaschine daher unter λ ≤ 1 betrieben werden. Entscheidend für eine Langzeitaktivität des Katalysators ist jedoch eine hinreichende Entschwefelung. Schwefel ist Bestandteil in vielen Kraftstoffen. Während eines Verbrennungsvorganges in der Verbrennungskraftmaschine entsteht dabei SO₂, das in magerer Atmosphäre (λ > 1) durch Sauerstoff zu SO₃⁻ oxidiert und anschließend als Sulfat in den NOₓ-Speicherkatalysator eingelagert wird. Dies kann einerseits zu verstärkten Alterungsprozessen, beispielsweise durch Rißbildung, führen, und andererseits wird dadurch eine katalytisch aktive Oberfläche sowie die Kapazität des NOₓ-Speicherkatalysators verringert. Daher ist es notwendig, den NOₓ-Speicherkatalysator periodisch zu entschwefeln.

Es ist bekannt, die Entschwefelung nach Erreichen eines vorgebbaren Grenzwertes zu initiieren, der ein Verhältnis der NOₓ-Konzentration stromauf und stromab des NOₓ-Speicherkatalysators wiedergibt. Dazu wird zumindest stromab des NOₓ-Speicherkatalysators ein die NOₓ-Konzentration detektierender Sensor in dem Abgaskanal angeordnet. Eine NOₓ-Konzentration stromauf des NOₓ-Speicherkatalysators kann entweder durch einen weiteren Sensor erfaßt werden oder in bekannter Weise mit Hilfe von Erfahrungswerten aus den Motorbetriebsparametem moduliert werden. Das Verhältnis der NOₓ-Konzentration gibt somit eine Effizienz des NOₓ-Speicherkatalysators für eine Konvertierungsreaktion des NOₓ an und liefert damit einen Verschwefelungsgrad.

Zur Entschwefelung muß der NOₓ-Speicherkatalysator auf eine Mindesttemperatur aufgeheizt werden, und der Arbeitsmodus der Verbrennungskraftmaschine muß bei λ ≤ 1 liegen (Regenerationsparameter). Bei sehr niedrigen Lambdawerten (0,65 bis 0,9) wird das Sulfat überwiegend zu H₂S reduziert, während bei Lambdawerten um 1 oder knapp unter 1 überwiegend SO₂ gebildet wird. Welcher der beiden Abbauprozesse bevorzugt stattfinden soll, kann somit über eine Einstellung des Lambdawertes gesteuert werden.

Die zur Entschwefelung notwendigen Bedingungen - Mindesttemperatur und Lambda ≤ 1 - können durch eine zumindest temporäre Beeinflussung wenigstens eines Betriebsparameters der Verbrennungskraftmaschine eingestellt werden. Als Maßnahmen kommen zum Beispiel in Frage eine Spätzündung, eine Nacheinspritzung während oder nach Beenden eines Verbrennungsvorgangs, eine zylinderselektive Vertrimmung der Verbrennungskraftmaschine oder auch schon ein Wechsel von dem mageren Arbeitsmodus in den fetten Arbeitsmodus. Dabei wird eine Abgastemperatur entweder durch eine verstärkte oder verlagerte Verbrennung oder durch eine verstärkte Emission der reduktiven Gaskomponenten, die exotherm in einem Vorkatalysator umgesetzt werden, ermöglicht.

Des Dokument EP 0 893 154 A beschreibt ein Verfahren zur Entschwefelung eines NO_{X}-Speiderkatalysators mittels Maßnahmen zum Erreichen einer Mindesttemperatur im NO_{X}-Kataxylator sowie eines Lambdawertes.

Durch die beispielhaft aufgezählten Maßnahmen steigt aber in jedem Fall der Kraftstoffverbrauch. Wenn jedoch im dynamischen Betrieb der Verbrennungskraftmaschine kurze Zeit später ohnehin die Mindesttemperatur überschritten würde, wäre - im nachhinein betrachtet - die künstliche Erhöhung der Abgastemperatur nicht erforderlich gewesen.

Der Erfindung liegt die Aufgabe zugrunde, die Entschwefelung des NOₓ-Speicherkatalysators dem dynamischen Betrieb der Verbrennungskraftmaschine anzupassen. Dabei soll insbesondere ein unnötiger, erhöhter Kraftstoffverbrauch für das Erreichen der Regenerationsparameter vermieden werden.

Durch das erfindungsgemäße Verfahren werden die Betriebsparameter der Verbrennungskraftmaschine gezielt ausgewählt und deren Einstellung erfolgt sukzessiv. Dadurch, daß beim Erreichen des Grenzwertes zumindest ein erster, eine Abgastemperatur erhöhender und den Arbeitsmodus der Verbrennungskraftmaschine mit λ ≤ 1 gewährender Betriebsparameter der Verbrennungskraftmaschine eingestellt wird und nach Ablauf einer vorgebbaren Zeitspanne bei Nichterreichen der Mindesttemperatur wenigstens ein weiterer, die Abgastemperatur erhöhender und den Arbeitsmodus der Verbrennungskraftmaschine mit λ ≤ 1 gewährender Betriebsparameter der Verbrennungskraftmaschine eingestellt wird, kann in einfacher Weise der Kraftstoffverbrauch für die Entschwefelung gesenkt werden.

Besonders vorteilhaft ist es, daß die jeweiligen Betriebsparameter in beliebiger Weise miteinander kombiniert werden können und damit sehr gezielt in Abhängigkeit von einer gegebenen Regellage der Verbrennungskraftmaschine die Entschwefelung gesteuert werden kann.

Eine Auswahl einer konkreten Maßnahme aus einer Vielzahl möglicher Maßnahmen kann vorteilhafterweise mit Hilfe ausgewählter Betriebsparameter, wie Abgastemperatur, Kraftstoffverbrauch, Fahrzeuggeschwindigkeit oder dergleichen, erfolgen. Ebenso läßt sich eine Dauer der Zeitspanne, in der eine konkrete oder mehrere konkrete Maßnahmen ergriffen werden sollen, unter Verwendung dieser Parameter bestimmen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Schnittansicht durch ein NOₓ-Speicherkatalysatorsystem für eine Verbrennungskraftmaschine;
- Figur 2: ein Verlauf einer Temperatur eines NOₓ-Speicherkatalysators in Abhängigkeit von ausgewählten Maßnahmen und
- Figur 3: ein schematisches Blockschaltbild zur Ermittlung konkreter Maßnahmen und deren Zeitspanne.

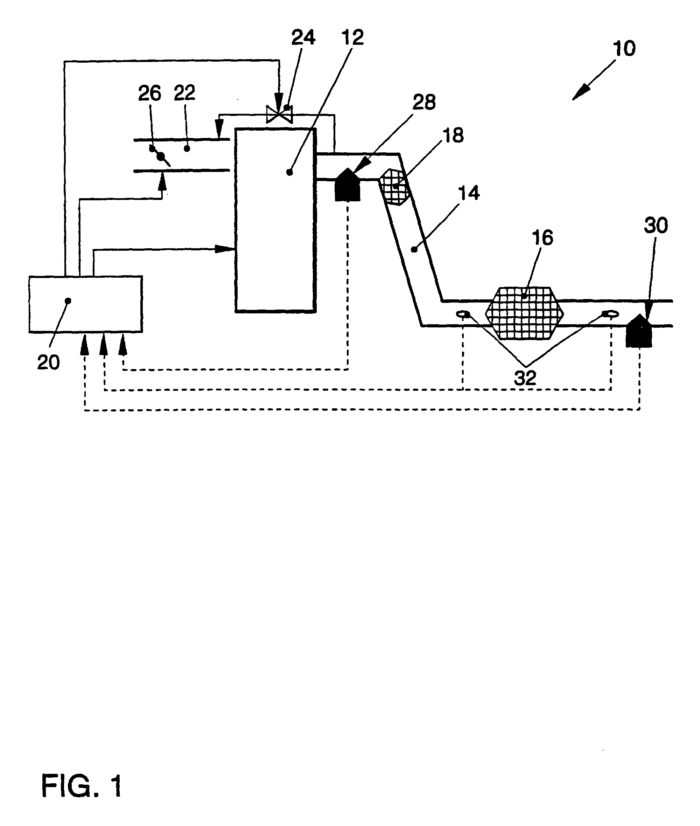

Die Figur 1 zeigt eine Anordnung eines Katalysatorsystems 10 zur Reinigung eines Abgases einer Verbrennungskraftmaschine 12. Dabei ist das Katalysatorsystem 10 innerhalb eines Abgaskanals 14 angeordnet. Das Katalysatorsystem 10 umfaßt einen NOₓ-Speicherkatalysator 16 und einen Vorkatalysator 18. Der Vorkatalysator 18 kann als ein 3-Wege-Katalysator ausgelegt sein, das heißt, er kann einerseits eine Oxidation reduktiver Gaskomponenten des Abgases ermöglichen als auch eine Reduktion von NOₓ katalysieren. Die Funktionsweise eines solchen Vorkatalysators 18 ist bekannt und soll im Rahmen dieser Beschreibung nicht weiter erläutert werden.

Die Verbrennungskraftmaschine 12 kann hinsichtlich eines Verhältnisses einer Sauerstoffkonzentration zu einer Konzentration eines Brennstoffgemisches in insgesamt drei verschiedenen Arbeitsmodi betrieben werden. Ein jeweiliger Arbeitsmodus kann durch einen Lambdawert charakterisiert werden. Liegt Sauerstoff in einem stöchiometrischen Überschuß vor, so ist λ > 1. Überwiegen hingegen die reduktiven Gaskomponenten, so ist λ < 1, und bei Vorliegen eines stöchiometrischen Gleichgewichts ist λ = 1.

Ein solcher Arbeitsmodus der Verbrennungskraftmaschine 12 kann in bekannter Weise mittels eines Motorsteuergerätes 20 reguliert werden. Dabei wird entsprechend einem geforderten Arbeitsmodus eine Sauerstoffkonzentration in einem Saugrohr 22 vor einer Verbrennung eingestellt, beispielsweise indem über ein Abgasrückführventil 24 Abgas in das Saugrohr 22 geleitet wird und über eine Drosselklappe 26 ein Volumenstrom gesteuert wird. Eine Zusammensetzung des Abgases kann durch ein Gassensorelement 28 erfaßt werden. Femer ist ein Gassensorelement 30 hinter dem NOₓ-Speicherkatalysator 16 angeordnet, und zudem können Temperatursensoren 32 in ausgewählten Bereichen des Abgaskanals 14 zur Ermittlung aktueller oder gemittelter Temperaturen angeordnet werden.

Während eines Betriebes der Verbrennungskraftmaschine 12 in einem mageren Arbeitsmodus, also mit λ > 1, wird vermehrt NOₓ gebildet. Da NOₓ lediglich bei λ ≤ 1 katalytisch umgesetzt werden kann, wird es unter magerer Atmosphäre in dem NOₓ-Speicherkatalysator absorbiert. Neben der Absorption von NOₓ kann auch SO₂ absorbiert werden. Dieser Prozeß führt im Gegensatz zu der Absorption von NOₓ zu partiellen Inhomogenitäten innerhalb des NOₓ-Speicherkatalysators 16, die letztendlich eine Rißbildung innerhalb des NOₓ-Speicherkatalysators 16 bewirken können. Gleichzeitig wird eine Speicherkapazität für NOₓ und eine katalytisch aktive Oberfläche, an der bei λ ≤ 1 die katalytische Umsetzung des NOₓ stattfindet, verringert. Entscheidend für eine Langzeitaktivität des NOₓ-Speicherkatalysators 16 ist daher eine hinreichende Entschwefelung.

Ein Zeitpunkt, ab dem die Entschwefelung initiiert werden soll, kann durch einen Grenzwert vorgegeben werden, der ein Verhältnis der NOₓ-Konzentration stromauf und stromab des NOₓ-Speicherkatalysators 16 in Abhängigkeit von der im NOₓ-Speicherkatalysator eingelagerten NOₓ-Masse wiedergibt. Dazu genügt es häufig, mittels des Gassensorelementes 30 die NOₓ-Konzentration stromab des NOₓ-Speicherkatalysators 16 zu erfassen, und mit Hilfe von Erfahrungswerten kann dann eine Effizienz des NOₓ-Speicherkatalysators 16 und damit ein Verschwefelungsgrad ermittelt werden.

Um die Entschwefelung zu ermöglichen, müssen zumindest zwei Bedingungen erfüllt sein. Zum einen muß eine Mindesttemperatur im Bereich des NOₓ-Speicherkatalysators 16 erreicht werden und zum anderen muß der Arbeitsmodus der Verbrennungskraftmaschine 12 bei λ ≤ 1 liegen (Regenerationsparameter). Ist Lambda sehr viel kleiner als 1, so wird bei der Reduktion des Sulfats überwiegend H₂S gebildet, während bei einem Arbeitsmodus um λ = 1 überwiegend SO₂ gebildet wird.

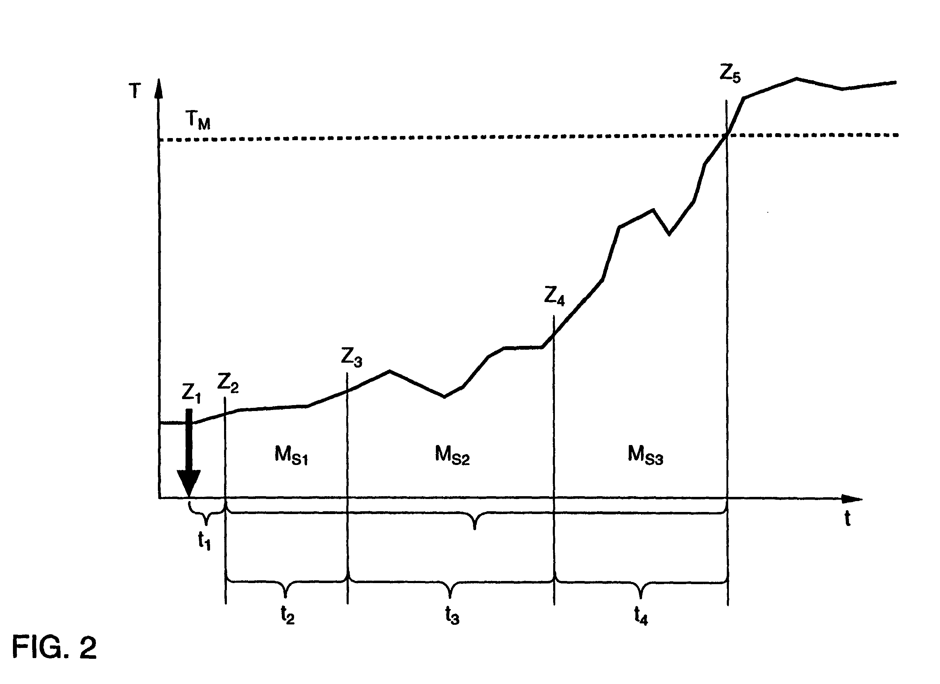

Häufig ist in einem dynamischen Betrieb der Verbrennungskraftmaschine 12 eine niedrigere Temperatur als die Mindesttemperatur gegeben, so daß durch geeignete Maßnahmen der NOₓ-Speicherkatalysator 16 aufgeheizt werden muß. In der Figur 2 ist ein Verlauf der Temperatur nach Überschreiten des Grenzwertes in Abhängigkeit von den ergriffenen Maßnahmen dargestellt. Die einzelnen Maßnahmen beinhalten eine zumindest temporäre Beeinflussung wenigstens eines Betriebsparameters der Verbrennungskraftmaschine 12.

Beispielhaft seien dazu folgende Maßnahmen, insbesondere mit ihrer Wirkung auf eine Abgastemperatur, erwähnt:
a) Ein Wechsel des Arbeitsmodus der Verbrennungskraftmaschine von λ > 1 in λ ≤ 1 führt in der Regel zu einer Erhöhung der Abgastemperatur.
b) Ebenso führt eine Spätzündung des Brennstoffgemisches bei gleicher eingeforderter Leistung zu einem erhöhten Kraftstoffverbrauch und damit zu einer Temperatursteigerung.
c) Eine Nacheinspritzung während oder nach Ende des Verbrennungsvorgangs führt zu einer teilweisen Verlagerung eines Verbrennungsortes in Richtung des Abgaskanals 14 und damit wiederum zu einer erhöhten Temperatur des Abgases im Bereich des NOₓ-Speicherkatalysators 16.
d) Durch eine zylinderselektive Vertrimmung der Verbrennungskraftmaschine 12 wird eine Emission reduzierender Gaskomponenten erhöht. Befindet sich - was üblicherweise der Fall ist - ein Vorkatalysator 18 zwischen der Verbrennungskraftmaschine 12 und dem NOₓ-Speicherkatalysator 16, so werden die reduzierenden Gaskomponenten zumindest zum Teil dort umgesetzt. Da diese Umsetzung exotherm ist, erhöht sich wiederum die Abgastemperatur.

Wird der Grenzwert zu einem Zeitpunkt Z₁ erreicht, kann - gegebenenfalls nach Ablauf einer Zeitspanne t₁ - eine erste Maßnahme Mₛ₁ ergriffen werden, die über eine Zeitspanne t₂ bis zu einem Zeitpunkt Z₃ aufrechterhalten wird. Nach welchen Kriterien eine Auswahl der Maßnahmen erfolgt und auf welche Weise die Zeitspannen festgelegt werden, wird später noch näher erläutert. Führt die Maßnahme M_{S1} nicht zu der notwendigen Erhöhung der Temperatur des NOₓ-Speicherkatalysators 16, so wird ab einem Zeitpunkt Z₃ eine Maßnahme Mₛ₂ für eine Zeitspanne t₃ ergriffen. In gleicher Weise wird ab einem Zeitpunkt Z₄ verfahren, wenn auch zu diesem Zeitpunkt noch nicht die Mindesttemperatur Tₘ erreicht wird. Insgesamt werden damit die Maßnahmen Mₛᵢ über die Zeitspanne tᵢ initiiert. In dem dargestellten Beispiel wird ab einem Zeitpunkt Z₅ die Mindesttemperatur Tₘ überschritten, und ab diesem Zeitpunkt Z₅ findet demnach die Entschwefelung des NOₓ-Speicherkatalysators 16 statt.

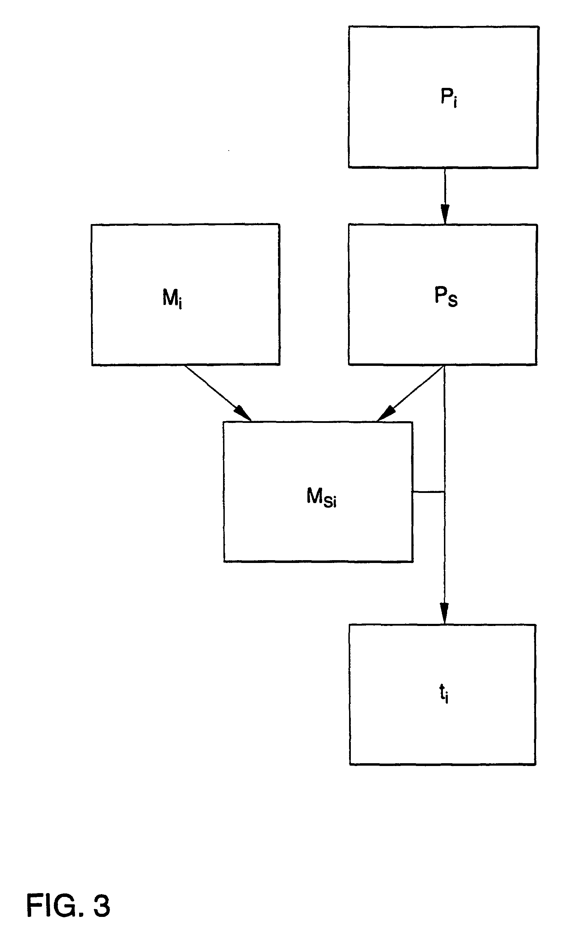

In der Figur 3 ist in einem schematischen Blockschaltbild ein Verlauf einer Ermittlung der konkreten Maßnahmen Mₛᵢ und deren zugehöriger Zeitspanne tᵢ dargestellt. Zunächst wird anhand von Betriebsparametern Pᵢ ein Parametersatz Pₛ bestimmt. Sinnvolle Parameter Pᵢ können dabei beispielsweise aus folgenden Daten herangezogen werden:
a) einer Temperatur des Abgases in beliebigen Bereichen des Abgaskanals 14, des NOₓ-Speicherkatalysators 16 oder eines Kühlmittels der Verbrennungskraftmaschine 12. Dabei kann eine aktuelle oder eine gemittelte Temperatur einfließen.
b) eine zurückgelegte Fahrstrecke nach der letzten Entschwefelung oder seit Start der Verbrennungskraftmaschine 12;
c) ein aktueller oder mittlerer Kraftstoffverbrauch;
d) eine aktuelle oder mittlere Fahrzeuggeschwindigkeit;
e) ein aktueller oder mittlerer Lambdawert in beliebigen Bereichen des Abgaskanals 14.

Nach der Ermittlung eines Parametersatzes Pₛ wird aus einer Gesamtzahl der Maßnahmen Mᵢ eine oder auch mehrere Einzelmaßnahmen Mₛᵢ ausgewählt.

Zur Ermittlung der Zeitspanne tᵢ für die ausgewählte Maßnahme Mₛᵢ wird wiederum der Parametersatz Pₛ herangezogen und es werden parameterspezifische Zeitintervalle festgelegt. Kumuliert mit vorgebbaren Zeitintervallen für eine ganz bestimmte Maßnahme, wird hieraus die Zeitspanne tᵢ berechnet.

Das erfindungsgemäße Verfahren sei zur Verdeutlichung in einem konkreten Ausführungsbeispiel nochmals beschrieben:
Fahrzeug B fährt auf einer Landstraße mit zirka 75 km/h und mittleren Abgastemperaturen von 500 °C. Nach Erkennen einer Notwendigkeit der Entschwefelung wird über eine maximale Zeitspanne von 10 Minuten oder eine maximale Fahrstrecke von 10 km der Magerbetrieb unterdrückt. Da die Abgastemperatur wesentlich höher als im Stadtverkehr liegt, ist auch die Wahrscheinlichkeit einer "natürlichen" Entschwefelung allein durch diese Maßnahme wesentlich höher als im Stadtverkehr. Falls die Mindesttemperatur in diesem Zeitintervall dennoch nicht erreicht wird, erfolgt anschließend für maximal 10 Minuten oder eine maximale Fahrstrecke von 10 km zusätzlich eine Spätzündung. Nach 2 Minuten sinkt jedoch die gleitende Durchschnittsgeschwindigkeit der letzten 60 Sekunden von 75 km/h auf 30 km/h und die Abgastemperatur auf 400 °C ab. Da somit vermutlich die Landstraße durch Stadtverkehr abgelöst wurde, wird auch die Zeitdauer der Spätzündung auf weitere 3 Minuten gekürzt, bevor statt der Spätzündung eine Nacheinspritzung durchgeführt wird, da bei Fortführung des reinen Stadtverkehrs die Spätzündung alleine wahrscheinlich nicht ausreicht, um die Mindesttemperatur zu überschreiten.

## Patentansprüche

1. Verfahren zur Entschwefelung von wenigstens einem in einem Abgaskanal einer Verbrennungskraftmaschine angeordneten NOₓ-Speicherkatalysator, wobei die Entschwefelung nach Erreichen eines vorgebbaren Grenzwertes, der ein Verhältnis der NOₓ-Konzentration stromauf und stromab des NOₓ-Speicherkatalysators in Abhängigkeit von der im NOₓ-Speicherkatalysator eingelagerten NOₓ-Masse wiedergibt, initiiert wird und zur Entschwefelung eine Mindesttemperatur am NOₓ-Speicherkatalysator und ein Arbeitsmodus der Verbrennungskraftmaschine mit λ ≤ 1 eingestellt wird sowie zur Erreichung dieses Arbeitsmodus und/oder der Mindesttemperatur wie Maßnahmen eine zumindest temporäre Beeinflussung wenigstens eines Betriebsparameters der Verbrennungskraftmaschine erfolgt, wobei beim Erreichen des Grenzwertes zumindest ein erster, eine Abgastemperatur erhöhender und den Arbeitsmodus der Verbrennungskraftmaschine (12) mit λ ≤ 1 gewährender Betriebsparameter der Verbrennungskraftmaschine (12) eingestellt wird **dadurch gekennzeichnet, daß** nach Ablauf einer vorgebbaren Zeitspanne bei Nichterreichen der Mindesttemperatur wenigstens ein weiterer, die Abgastemperatur erhöhender und den Arbeitsmodus der Verbrennungskraftmaschine (12) mit λ ≤ 1 gewährender Betriebsparameter der Verbrennungskraftmaschine (12) eingestellt wird.

2. Verfahren nach Anspruch 1, **dadurch gekennzeichnet, daß** beim Erreichen des Grenzwertes für eine Zeitspanne (t₁) keine Maßnahme ergriffen wird.

3. Verfahren nach einem der Ansprüche 1 oder 2, **dadurch gekennzeichnet, daß** eine Auswahl der Maßnahmen anhand von aktuellen oder gemittelten Betriebsparametern, wie eine Temperatur des NOₓ-Speicherkatalysators (16), eine Temperatur des Abgases in einem beliebigen Bereich des Abgaskanals (14), eine Temperatur eines Kühlmittels der Verbrennungskraftmaschine (12), eine Fahrstrecke nach einer letztmaligen Entschwefelung, eine Fahrstrecke seit Start der Verbrennungskraftmaschine (12), ein Kraftstoffverbrauch, ein Lambdawert in beliebigen Bereichen des Abgaskanals (14) oder dergleichen, erfolgt.

4. Verfahren nach Anspruch 3, **dadurch gekennzeichnet, daß** eine Dauer der vorgebbaren Zeitspanne anhand der aktuellen oder gemittelten Betriebsparameter und der ausgewählten Maßnahmen erfolgt.

## Claims

1. Method for desulphurizing at least one NOₓ storage catalytic converter which is arranged in an exhaust duct of an internal combustion engine, the desulphurization being initiated after a predefinable limiting value, which is a ratio of the NOₓ concentration upstream and downstream of the NOₓ storage catalytic converter as a function of the NOₓ mass stored in the NOₓ storage catalytic converter, is reached, and for the purpose of desulphurization a minimum temperature being set at the NOₓ storage catalytic converter and a working mode of the internal combustion engine where λ ≤ 1 being set, and at least one operating parameter of the internal combustion engine being at least temporarily influenced in order to bring about this working mode and/or the minimum temperature, as measures, at least a first operating parameter of the internal combustion engine (12) which increases an exhaust gas temperature and ensures the working mode of the internal combustion engine (12) where λ ≤ 1, being set when the limiting value is reached, **characterized in that**, after a predefinable time period when the minimum temperature has not been reached has passed, at least one further operating parameter of the internal combustion engine (12) which increases the exhaust gas temperature and ensures the working mode of the internal combustion engine (12) where λ ≤ 1 is set.

2. Method according to Claim 1, **characterized in that** no measures are taken when the limiting value is reached for a time period (t₁).

3. Method according to one of Claims 1 or 2, **characterized in that** a selection of the measures is made by reference to current or averaged operating parameters such as a temperature of the NOₓ storage catalytic converter (16), a temperature of the exhaust gas in any desired range of the exhaust gas duct (14), a temperature of a coolant of the internal combustion engine (12), a distance travelled after the last desulphurization process, a distance travelled since the internal combustion engine (12) started, a level of fuel consumption, a lambda value in any regions of the exhaust gas duct (14) or the like.

4. Method according to Claim 3, **characterized in that** a duration of the predefinable time period is determined by reference to the current or averaged operating parameters and the selected measures.

## Revendications

1. Procédé de désulfuration d'au moins un catalyseur-accumulateur de NOₓ disposé dans un conduit de gaz d'échappement d'un moteur à combustion interne, la désulfuration étant lancée après qu'a été atteinte une valeur-limite prédéterminable qui donne un rapport entre les concentrations en NOₓ en amont et en aval du catalyseur-accumulateur de NOₓ en fonction de 1a masse de NOₓ contenue dans le catalyseur-accumulateur de NOₓ, une température minimale étant établie dans le catalyseur-accumulateur de NOₓ et un mode de travail à λ ≤ 1 étant réglé sur le moteur à combustion interne en vue de la désulfuration, les dispositions prises pour obtenir ce mode de travail et/ou la température minimale étant une action au moins temporaire sur au moins un paramètre de fonctionnement du moteur à combustion interne et lorsque la valeur- limite est atteinte, au moins un premier paramètre de fonctionnement du moteur à combustion interne (12) qui augmente la température des gaz d'échappement et qui assure le mode de travail à λ ≤ 1 du moteur à combustion interne (12) étant réglé, **caractérisé en ce qu'**après qu'un laps de temps prédéterminable s'est écoulé, si la température minimale n'a pas été atteinte, au moins un autre paramètre de fonctionnement du moteur à combustion interne (12) qui augmente la température des gaz d'échappement et qui assure le mode de travail à λ ≤ 1 du moteur à combustion interne (12) est réglé.

2. Procédé selon la revendication 1, **caractérisé en ce que** lorsque la valeur-limite est atteinte pendant un laps de temps (t₁), aucune disposition n'est prise.

3. Procédé selon l'une des revendications 1 ou 2, **caractérisé en ce que** la sélection des dispositions est effectuée à l'aide de valeurs instantanées ou de valeurs moyennes de paramètres de fonctionnement tels que la température du catalyseur-accumulateur de NOₓ (16), la température des gaz d'échappement dans une partie quelconque du conduit de gaz d'échappement (14), la température d'un fluide de refroidissement du moteur à combustion interne (12), la distance parcourue depuis la dernière désulfuration, la distance parcourue depuis le démarrage du moteur à combustion interne (12), la consommation en carburant, la valeur de lambda dans des zones quelconques du conduit de gaz d'échappement (14) ou similaires.

4. Procédé selon la revendication 3, **caractérisé en ce que** la durée du laps de temps prédéterminable est définie à l'aide des valeurs instantanées ou des valeurs moyennes des paramètres de fonctionnement et des dispositions sélectionnées.
